(19) Europäisches Patentamt
European Patent Office
Office européen des brevets

(11) Veröffentlichungsnummer : **0 010 283**
**B1**

(12) # EUROPÄISCHE PATENTSCHRIFT

(45) Veröffentlichungstag der Patentschrift : **11.02.81**

(51) Int. Cl.[3] : **C 07 F 9/18**, C 07 F 9/165, C 07 F 9/09, A 01 N 57/14

(21) Anmeldenummer : **79103960.5**

(22) Anmeldetag : **15.10.79**

(54) **Thiolphosphorsäure-S-4-nitro-2-trichlormethylphenyl-ester, ihre Herstellung und Verwendung.**

(30) Priorität : **18.10.78 DE 2845329**

(43) Veröffentlichungstag der Anmeldung : **30.04.80 (Patentblatt 80/09)**

(45) Bekanntmachung des Hinweises auf die Patenterteilung : **11.02.81 Patentblatt 81/06**

(84) Benannte Vertragsstaaten : **AT BE CH DE FR GB IT LU NL SE**

(56) Entgegenhaltungen : **US - A - 2 795 598**

(73) Patentinhaber : **BASF Aktiengesellschaft**
**Carl-Bosch-Strasse 38**
**D-6700 Ludwigshafen (DE)**

(72) Erfinder : **Hagen, Helmut, Dr. Dipl.-Ing.**
**Max-Slevogt-Strasse 17E**
**D-6710 Frankenthal (DE)**
Erfinder : **Pommer, Ernst-Heinrich, Dr.**
**Berliner Platz 7**
**D-6703 Limburgerhof (DE)**
Erfinder : **Reuther, Wolfgang, Dr.**
**Am Pfercheihang 16**
**D-6900 Heidelberg (DE)**
Erfinder : **Ziegler, Hans, Dr.**
**Hans-Purrmann-Strasse 4**
**D-6710 Frankenthal (DE)**

**EP 0 010 283 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Thiolphosphorsäure-S-4-nitro-2-trichlormethylphenyl-ester, ihre Herstellung und Verwendung

Die vorliegende Erfindung betrifft neue, wertvolle Thiolphosphorsäure-S-4-nitro-2-trichlormethylphenyl-ester, Verfahren zu ihrer Herstellung sowie ihre Verwendung als Fungizide.

Es ist bereits bekannt, daß Thiolphosphorsäure-O-O-diisopropyl-S-benzylester (W.T. Thomson, Agricultural Chemicals IV, Fungizides, Indianapolis, Indiana 1973) oder Dithiolphosphorsäure-O-butyl-S-benzyl-S-ethylester (US-PS 3 825 633) als Fungizide verwendet werden.

Weiter sind aus der US-PS 2 795 598 Thiophosphorsäure-4-nitro-3-trifluormethylphenyl-ester bekannt, welche pestizide Eigenschaften besitzen.

Es wurden nun Verbindungen gefunden, die gut wirksam gegen Schadpilze sind und die ein besseres Wirkungsspektrum besitzen.

Gegenstand der Erfindung sind neue Thiolphosphorsäure-S-4-nitro-2-trichlormethylphenyl-ester der Formel I

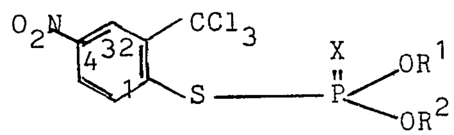

(I),

in der

X Sauerstoff oder Schwefel und

$R^1$ und $R^2$ gleich oder verschieden sind und gegebenenfalls substituierte aliphatische Reste mit 1-18 Kohlenstoffatomen oder gegebenenfals substituierte cyclische Reste mit 5-18 Kohlenstoffatomen bedeuten.

$R^1$ und $R^2$ bedeuten beispielsweise Methyl, Ethyl, Isopropyl, n-Propyl, Butyl, n-Hexyl, n-Octyl, n-Dodecyl. Als Substituenten an den aliphatischen Resten kommen insbesondere in Betracht : Hydroxyl, Halogen, vorzugsweise Fluor, Chlor und Brom ; Alkoxyl, vorzugsweise mit 1-4 Kohlenstoffatomen ; Carboxyl, vorzugsweise mit 2-20 Kohlenstoffatomen, und Carbalkoxy, vorzugsweise mit 2-10 Kohlenstoffatomen. Beispiele für substituierte Alkylreste sind Methoxyethyl, Hydroxyethyl, Stearyl.

Als alicyclische Reste kommen vorzugsweise Cycloalkylreste in Betracht, die in der gleichen Weise wie oben angegeben substituiert sein können.

Gegenstand der Erfindung ist weiter ein Verfahren zur Herstellung der Verbindungen der Formel I, welches darin besteht, daß man

a) 4-Nitro-2-trichlormethyl-benzolsulfensäurechlorid in einem inerten Lösungsmittel mit einem Phosphorigsäuredialkylester der Formel II

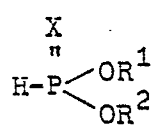

(II),

worin $R^1$, $R^2$ und X die oben angegebene Bedeutung besitzen, bei Temperaturen von -40 bis 120 °C umsetzt oder

b) — falls X Sauerstoff bedeutet und $R^1$ und $R^2$ gleich sind — 4-Nitro-2-trichlormethylbenzolsulfensäurechlorid mit einem Phosphit der Formel III

$$P(OR^1)_3 \qquad (III),$$

worin $R^1$ dasselbe wie oben bedeutet, in einem inerten Lösungsmittel bei Temperaturen von −20 bis 120 °C reagieren läßt.

Für die Umsetzung kommen als inerte Lösungsmittel zweckmäßigerweise halogenierte Kohlenwasserstoffe, wie Tetrachlorkohlenstoff, Chloroform, Methylenchlorid und Aromaten wie z.B. Toluol, Benzol in Frage. Der für die Temperaturen von 0 bis 100 °C.

Das als Ausgangsprodukt verwendete 4-Nitro-2-trichlormethylbenzolsulfensäurechlorid wird zweckmäßigerweise nach dem in der DE-OS 24 60 783 beschriebenen Verfahren durch Chlorierung von 5-Nitrobenzo-1,2-dithio-3-thion in einem inerten Lösungsmittel, wie Tetrachlorkohlenstoff, Chloroform oder Dichlorethan bei Temperaturen von −20 bis 100 °C, vorzugsweise 20 bis 50 °C hergestellt.

Die Herstellung der neuen Wirkstoffe wird in den folgenden Beispielen erläutert.

Beispiele

1. In einer Rührapparatur werden bei 10 °C 22 g Phosphorigsäuredimethylester in 200 ml Tetrachlorkohlenstoff gelöst und mit einer Lösung von 61,4 g 4-Nitro-2-trichlormethylbenzolsulfensäurechlorid in 200 ml Tetrachlorkohlenstoff versetzt. Man läßt 5 Stunden bei Raumtemperatur nachreagieren und erwärmt anschließend eine Stunde auf 70 °C.

Nach Erkalten wird der Ansatz auf 500 g Eis gegeben, die organische Phase abgetrennt und mit Wasser neutral gewaschen.

Nach Entfernung des Tetrachlorkohlenstoffs im Vakuum erhält man 70 g Thiolphosphorsäure-O,O-dimethyl-S-4-nitro-2-trichlormethylphenyl-ester als gelbes Pulver, Fp. : 68 °C.
Ausbeute : 92 % d. Theorie.

Analyse

| | C | H | N | S | Cl | O | P |
|---|---|---|---|---|---|---|---|
| gef. | 28,2 | 2,5 | 3,7 | 8,4 | 28,2 | 20,9 | 8,3 |
| ber. | 28,4 | 2,4 | 3,7 | 8,4 | 28,0 | 21,0 | 8,2 |

Dieselbe Verbindung wurde auch aus 61,4 g Nitro-2-trichlormethylbenzolsulfensäurechlorid und 23,6 g Trimethylphosphit in Toluol hergestellt.
Ausbeute : 90 % d. Theorie.

2. 61,4 g 4-Nitro-2-trichlormethylbenzolsulfensäurechlorid werden in 200 ml Toluol gelöst und bei 10 °C zu einer Lösung von 24,2 g Thiophosphorigsäuredimethylester in 200 ml Toluol getropft. Nach 4-stündigem Rühren bei Raumtemperatur wird eine Stunde auf 70 °C erhitzt.

Nach Erkalten wird der Ansatz auf Eis gegeben, die organische Phase abgetrennt und mit Wasser neutral waschen. Nach Abziehen des Toluols im Vakuum erhält man 74 g Dithiophosphorsäure-O,O-dimethyl-S-4-nitro-2-trichlormethyl-phenyl-ester als helles Öl.
Ausbeute : 93 % d. Theorie.

Analyse

| | C | H | N | S | Cl | O | P |
|---|---|---|---|---|---|---|---|
| gef. | 27,2 | 2,5 | 3,5 | 16,0 | 26,8 | 16,2 | 7,9 |
| ber. | 27,2 | 2,3 | 3,5 | 16,1 | 26,9 | 16,1 | 7,8 |

3. Zu 61,4 g 4-Nitro-2-trichlormethylbenzolsulfensäurechlorid, gelöst in 300 ml Toluol, werden bei 10 °C 33,2 g Phosphorigsäurediethylester zugetropft. Nach 6 stündiger Reaktion bei Raumtemperatur wird das Toluol im Vakuum entfernt. Man erhält 65 g Thiolphosphorsäure-O,O-diethyl-S-4-nitro-2-trichlormethylphenyl-ester als helles Öl.
Ausbeute : 80 % d. Theorie.

Dieselbe Verbindung wird auch analog Beispiel 1 aus 61,4 g 4-Nitro-2-trichlormethylphenylsulfensäurechlorid und 27,2 g Diethylphosphit erhalten.
Ausbeute : 95 % d. Theorie.

Analyse

| | C | H | N | S | Cl | O | P |
|---|---|---|---|---|---|---|---|
| gef. | 32,3 | 3,3 | 3,4 | 8,0 | 26,0 | 19,5 | 7,5 |
| ber. | 32,3 | 3,2 | 3,4 | 7,8 | 26,1 | 19,6 | 7,6 |

4. 30,8 g Thiophosphorsäurediethylester gelöst in 100 ml Benzol, werden bei 10 °C 61,4 g 4-Nitro-2-trichlormethylbenzolsulfensäurechlorid in 300 ml Benzol zugegeben.

Anschließend wird langsam auf 70 °C erwärmt und 1 Stunde bei dieser Temperatur gerührt. Die Aufarbeitung des Ansatzes erfolgt analog Beispiel 2. Man erhält 83 g Dithiophosphorsäure-O,O-diethyl-S-4-nitro-2-trichlormethylphenyl-ester als helles Öl.
Ausbeute : 98 % d. Theorie.

Analyse

| | C | H | N | S | Cl | O | P |
|---|---|---|---|---|---|---|---|
| gef. | 31,0 | 3,0 | 3,4 | 15,0 | 25,3 | 15,2 | 7,4 |
| ber. | 31,1 | 3,1 | 3,3 | 15,1 | 25,1 | 15,1 | 7,3 |

Analog Beispiel 1 erhält man :

5. Thiolphosphorsäure-O,O-di-n-propyl-S-4-nitro-2-trichlormethylphenyl-ester, helles Öl.
Ausbeute : 97 % d. Theorie.

Analyse

| | C | H | N | S | Cl | O | P |
|---|---|---|---|---|---|---|---|
| gef. | 35,6 | 4,0 | 3,3 | 7,4 | 24,1 | 18,2 | 7,2 |
| ber. | 35,7 | 3,9 | 3,2 | 7,3 | 24,4 | 18,3 | 7,1 |

6. Thiolphosphorsäure-O,O-diisopropyl-S-4-nitro-2-trichlormethylphenyl-ester, helles Pulver, Fp.: 65 °C.
Ausbeute : 97 % d. Theorie.

Analyse

| | C | H | N | S | Cl | O | P |
|---|---|---|---|---|---|---|---|
| gef. | 35,7 | 3,8 | 3,1 | 7,1 | 24,4 | 18,5 | 7,2 |
| ber. | 35,7 | 3,9 | 3,2 | 7,3 | 24,4 | 18,3 | 7,1 |

7. Thiolphosphorsäure-O-methyl-O-cyclohexyl-S-4-nitro-2-trichlormethylphenylester, helles Öl.
Ausbeute : 95 % d. Theorie.

Analyse

| | C | H | N | S | Cl | O | P |
|---|---|---|---|---|---|---|---|
| gef. | 37,6 | 3,7 | 3,0 | 7,2 | 23,9 | 17,9 | 6,7 |
| ber. | 37,5 | 3,8 | 3,1 | 7,1 | 23,8 | 17,8 | 6,9 |

8. Thiolphosphorsäure-O,O-di-n-butyl-S-4-nitro-2-trichlormethylphenyl-ester, helles Öl.
Ausbeute : 97 % d. Theorie.

Analyse

| | C | H | N | S | Cl | O | P |
|---|---|---|---|---|---|---|---|
| gef. | 38,7 | 4,4 | 3,1 | 7,0 | 22,9 | 17,2 | 6,6 |
| ber. | 38,8 | 4,5 | 3,0 | 6,9 | 22,9 | 17,2 | 6,7 |

9. Thiolphosphorsäure-O,O-di-n-dodecyl-S-4-nitro-2-trichlormethylphenyl-ester, helles Öl.
Ausbeute : 91 % d. Theorie.

Analyse

| | C | H | N | S | Cl | O | P |
|---|---|---|---|---|---|---|---|
| gef. | 54,0 | 7,7 | 1,8 | 4,6 | 15,6 | 11,7 | 4,4 |
| ber. | 54,0 | 7,7 | 2,0 | 4,6 | 15,5 | 11,6 | 4,5 |

10. Thiolphosphorsäure-O-methyl-O-ethyl-S-4-nitro-2-trichlormethylphenyl-ester, helles Öl.
11. Thiolphosphorsäure-O-methyl-O-isopropyl-S-4-nitro-2-trichlormethylphenyl-ester, helles Öl.
12. Thiolphosphorsäure-O-methyl-O-n-butyl-S-4-nitro-2-trichlormethylphenyl-ester, helles Öl.
13. Thiolphosphorsäure-O,O-dicyclohexyl-S-4-nitro-2-trichlormethylphenyl-ester, helles Öl.
14. Thiolphosphorsäure-O,O-distearyl-S-4-nitro-2-trichlormethylphenyl-ester, helles Öl.

Analog Beispiel 4 wurden hergestellt :

15. Dithiophosphorsäure-O,O-di-n-butyl-S-4-nitro-2-trichlormethylphenyl-ester, helles Öl.
16. Dithiophosphorsäure-O-methyl-O-butyl-S-4-nitro-2-trichlormethylphenyl-ester, helles Öl.
17. Dithiophosphorsäure-O,O-di-n-dodecyl-S-4-nitro-2-trichlormethylphenyl-ester, helles Öl.
18. Dithiophosphorsäure-O-ethyl-O-(2-isopropyl)-S-4-nitro-2-trichlormethylphenyl-ester, helles Öl.
19. Dithiophosphorsäure-O,O-dicyclohexyl-S-4-nitro-2-trichlormethylphenyl-ester, helles Öl.

Die neuen Verbindungen zeigen eine gute fungizide Wirkung und Pflanzenverträglichkeit. Sie eignen sich zur Bekämpfung von phytopathogenen Bodenpilzen, beispielsweise Pythium, Aphanomyces- und Fusarium-Arten, die Auflauf- und Keim-lingskrankheiten an Leguminosen, Salat, Rüben, Baumwolle und anderen Kulturpflanzen hervorrufen können. Darüber hinaus können die neuen Verbindungen zur Bekämpfung von Schadpilzen eingesetzt werden, die oberirdische Pflanzenteile befallen und zerstören ; insbesondere sind sie geeignet zur Bekämpfung von Pyricularia oryzae an Reis.

Die erfindungsgemäßen Mittel können gleichzeitig das Wachstum von zwei oder mehr der genannten Pilze unterdrücken. Die zur Bekämpfung der phytopathogenen Pilze erforderlichen Aufwandmengen liegen zwischen 0,05 und 5 kg Wirkstoff/ha Kulturfläche.

Ferner eignen sich die neuen Wirkstoffe zum Schutz von lagerndem und verbautem Holz gegen den Befall bzw. Abbau durch holzzerstörende Pilze aus der Klasse der Basidiomyceten, wie beispielsweise Coniophora puteana, Serpula lacrymans, Poria monticola, Lenzites trabea, Trametes versicolor, Armillaria mellea, Fomes annosus.

Die erfindungsgemäßen Wirkstoffe können in die üblichen Formulierungen übergeführt werden, wie Lösungen, Emulsionen, Suspensionen, Pulver, Pasten und Granulate. Diese werden in bekannter Weise hergestellt, z.B. durch Vermischen des Wirkstoffs mit Lösungsmitteln und/oder Trägerstoffen, gegebenenfalls unter Verwendung von Emulgiermitteln und Dispergiermitteln, wobei im Falle der Benutzung von

Wasser als Verdünnungsmittel auch andere organische Lösungsmittel als Hilfslösungsmittel verwendet werden können. Als Hilfsstoffe kommen dafür im Wesentlichen in Frage : Lösungsmittel wie Aromaten (z.B. Xylol, Benzol), chlorierte Aromaten (z.B. Chlorbenzole), Paraffine (z.B. Erdölfraktionen), Alkohole (z.B. Methanol, Butanol), Amine (z.B. Ethanolamin, Dimethylformamid) und Wasser ; Trägerstoffe wie natürliche Gesteinsmehle (z.B. Kaoline, Tonerden, Talkum, Kreide) und synthetische Gesteinsmehle (z.B. hochdisperse Kieselsäure Silikate) ; Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose. Die fungiziden Mittel enthalten 0,1 bis 95 % (Gewichtsprozent) Wirkstoff, vorzugsweise 0,5 bis 70 %. Die Aufwandmengen liegen je nach Art des gewünschten Effektes zwischen 0,05 und 5 kg Wirkstoff je ha.

Die Formulierungen, bzw. die daraus hergestellten, gebrauchsfertigen Zubereitungen wie Lösungen, Emulsionen, Suspensionen, Pulver, Pasten oder Granulate, werden in bekannter Weise angewendet, beispielsweise durch Versprühen, Vernebeln, Verstäuben, Verstreuen, Beizen oder Gießen.

Beispiele für solche Formulierungen sind :

I. Man vermischt 90 Gewichtsteile der Verbindung des Beispiels 1 mit 10 Gewichtsteilen N-Methyl-α-pyrrolidon und erhält eine Lösung, die zur Anwendung in Form kleinster Tropfen geeignet ist.

II. 20 Gewichtsteile der Verbindung des Beispiels 2 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 mol Ethylenoxid an 1 Mol Ricinusöl besteht. Durch Ausgießen und feines Verteilen der Lösung in 10 000 Gewichtsteilen Wasser erhält man eine Wäßrige Dispersion, die 0,02 Gewichtsprozent des Wirkstoffs enthält.

III. 20 Gewichtsteile der Verbindung des Beispiels 1 werden in einer Mischung gelöst, die aus 40 Gewichtsteilen Cyclohexanon, 30 Gewichtsteilen Isobutanol, 20 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

IV. 20 Gewichtsteile der Verbindung des Beispiels 3 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

V. 20 Gewichsteile der Verbindung des Beispiels 6 werden mit 3 Gewichtsteilen des Natriumsalzes der Diisobutylnaphtalin-α-sulfonsäure, 17 Gewichtsteilen des Natriumsalzes einer Ligninsulfonsäure aus einer Sulfitablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gewichtsprozent des Wirkstoffs enthält.

VI. 3 Gewichtsteile der Verbindung des Beispiels 9 werden mit 97 Gewichtsteilen feinteiligem Kaolin innig vermischt. Man erhält auf diese Weise ein Stäubemittel, das 3 Gewichtsprozent des Wirkstoffs enthält.

VII. 30 Gewichtsteile der Verbindung des Beispiels 7 werden mit einer Mischung aus 92 Gewichtsteilen pulverförmigem Kieselsäuregel und 8 Gewichtsteilen Paraffinöl, das auf die Oberfläche des Kieselsäuregels gesprüht wird, innig vermischt. Man erhält auf diese Weise eine Aufbereitung des Wirkstoffs mit guter Haftfähigkeit.

VIII. 40 Gewichtsteile des Wirkstoffs des Beispiels 3 werden mit 10 Teilen Natriumsalz eines Phenolsulfonsäure-harnstoff-formaldehyd-Kondensates, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gewichtsprozent Wirkstoff enthält.

IX. 20 Teile der Verbindung des Beispiels 4 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

X. Zur Herstellung eines öligen Holzschutzmittels mit 1 % Wirkstoff wird 1 Teil der Verbindung des Beispiels 1 mit 15 Teilen eines Alkydharzes mit mittlerem Gehalt an Ölen (20 % Festharz) gemischt. Anschließend fügt man 45 Teile einer aromatenhaltigen Benzinfraktion hinzu, filtriert, gegebenenfalls, um Verunreinigungen zu beseitigen, und füllt mit einer aliphatenhaltigen Benzinfraktion auf 100 Teile auf.

In analoger Weise werden ölige Holzschutzmittel mit 2 % Wirkstoff hergestellt.

Die erfindungsgemäßen Mittel können in dieser Anwendungsform auch zusammen mit anderen Wirkstoffen vorliegen, z.B. Herbiziden, Insektiziden, Wachstumregulatoren und Fungizide oder auch mit Düngemitteln vermischt werden. Beim Vermischen mit Fungiziden erhält man dabei in vielen Fällen eine Vergrößerung des Wirkungsspektrums.

Fungizide, die mit den erfindungsgemäßen Verbindungen kombiniert werden können sind beispielsweise :

Ferridimethyldithiocarbamat (Ferbam),
Zinkdimethyldithiocarbamat (Ziram),

Manganäthylenbisdithiocarbamat (Maneb),
Mangan-zink-ethylendiamin-bis-dithiocarbamat (Mancoceb),
Zinkethylenbisdithiocarbamat (Zineb),
Tetramethylthiuramdisulfid (Thiram),
3,5-Dimethyl-1,3,5-2H-tetrahydrothiadiazin-2-thion,
Ammoniak-Komplex von Zink-(N,N'-ethylen)-bis-dithiocarbamat
und
N,N'-Polyethylen-bis-(thiocarbamoyl)-disulfid (Metiram),
Zink-(N,N'-propylen)-bis-dithiocarbamat (Propineb),
Ammoniak-Komplex von Zink-(N,N'-propylen-bis-dithiocarbamat)
und
N,N'-Polypropylen-bis-(thiocarbamoyl)-disulfid (Methyl-Metiram) ;
Dinitro-(1-methylheptyl)-phenyl-crotonat (Dinocap),
2-sec.-Butyl-4,6-dinitrophenyl-3,3-dimethylacrylat (Binapacryl),
2-sec.-Butyl-4,6-dinitrophenylisopropylcarbonat,
2,4,5-Trichlorphenol
Pentachlorphenol (PCP),
Barium-Salz von Pentachlorphenol (5 B),
Pentachlorphenyl-acetat,
Pentachlorbenzylalkohol,
Di-(5-chloro-2-hydroxyphenyl)-methan (Dichlorophen),
Phenyl-(5-chloro-2-hydroxyphenyl)-methan,
N-Trichlormethylthio-tetrahydrophthalamid (Captan),
N-Trichlormethylthio-phthalimid (Folpet),
N-Fluordichlormethylthio-phthalimid,
N-(1,1,2,2-Tetrachlorethylthio)-tetrahydrophthalimid
(Captafol),
2-Heptadecyl-2-imidazolinacetat (Glyodin),
2,4-Dichlor-6-(o-chloranilino)-s-triazin (Anilazin),
Diethylphthalimidophosphorohioat (Plondrel),
5-Amino-1-bis-(dimethylamino)-phosphinyl-3-phenyl-1,2,4-triazol
5-Ethoxy-3-trichlormethyl-1,2,4-thiadiazol,
2,3-Dicyano-1,4-dithiaanthrachinon (Dithianon),
Chinoxalin-2,3-cycl.-trithiocarbonat (Thioquinox),
1-(Butylcarbamoyl)-2-benzimidazol-carbaminsäuremethylester
(Benomyl),
2-Methoxycarbonylamino-benzimidazol,
2-Thodanmethylthio-benzthiazol (Busan),
4-(2-Chlorphenylhydrazono)-3-methyl-5-isoxazolon,
1-(1,2,4-Triazolyl-1')-1-(4'-chlorphenoxy)-3,3-dimethylbutan-2-on (Triadimefon),
1-(1-Imidazoyl)-2-allyloxy-2-(2,4-dichlorphenyl)-ethan
(Imazalil),
2-(O,O-Diethyl-thionophosphoryl)-5-methyl-6-carethoxy-pyrazolo-(1,5a)-pyrimidin (Pyrazophos),
Pyridin-2-thiol-1-oxid,
8-Hydroxychinolin bzw. dessen Kupfer-Salz,
5,5-Dimethyl-3-(3,5-dichlorphenyl)-2,4-dioxo-1,3-oxazolidin,
5-Methyl-5-vinyl-3-(3,5-dichlorphenyl)-2,4-dioxo-1,3-oxazolidin,
2-[Furyl-(2)]-benzimidazol,
Piperazin-1,4-diyl-bis 1-(2,2,2-Trichlor-ethyl)-formamid
(Triforine),
2-[(Thiazolyl-(4)]-benzimidazol,
5-Butyl-2-dimethylamino-4-hydroxy-6-methyl-pyrimidin
(Dimethirimol),
Bis-(p-chlorphenyl)-3-pyridinmethanol,
1,2-Bis-(3-ethoxycarbonyl-2-thioureido)-benzol (Thiophanat)
1,2-Bis-(3-methoxycarbonyl-1-thioureido)-benzol (Thiophanat M),
Dodecylguanidinacetat (Dodine),
3-[2-(3,5-Dimethyl-2-oxycyclohexyl)-2-hydroxyethyl]-glutarimid (Cycloheximide),
Hexachlorbenzol,
N-Dichlorfluormethylthio-N',N'-dimethyl-N-phenyl-schwefelsäurediamid (Dichlorfluanid),
N-Dichlorfluormethylthio-N-methyl-N'-methyl-N'-phenyl-schwefelsäurediamid.
2,4,5,6-Tetrachlor-isophthalonitril (Daconil),
1-(3,4-Dichloranilino)-1-formylamino-2,2,2-trichlorethan
(Chloraniformethan),
2,6-Dimethyl-N-tridecyl-morpholin bzw. dessen Salze,

2,6-Dimethyl-N-cyclododecyl-morpholin bzw. dessen Salze,
2,3-Dichlor-1,4-naphthochinon,
1,4-Dichlor-2,5-dimethoxybenzol,
p-Dimethylaminobenzol-diazonatriumsulfonat,
2-Chlor-1-nitro-propan,
Polychlornitrobenzole wie Pentachlornitrobenzol,
Methylisothiocyanat,
Triphenyl-zinn-acetat (Fentin-acetat),
fungizide Antibiotika wie Griseofulvin oder
Kasugamycin,
Methyl-N-(2,6-dimethyl)-N-(2-furoyl)-alaminat
Methyl-N-(2,5-dimethyl)-N-(2-methoxyacetyl)-alaminat
Mercaptobenzthiazol
2-Cyano-N-[(ethylamino) carbonyl]-2-(methoximino)-acetamid
β-(4-Chlorphenoxy)-α-(1,1-dimethyl)-1H-1,2,4-triazol-1-ethanol
Benzisothiazolon
Tetrafluordichloraceton,
1-Phenylthiosemicarbazid,
N-Nitroso-cyclohexylhydroxylamin und das Aluminium-Salz
(Fungol),
Bordeauxmischung,
nickelhaltige Verbindungen und Schwefel,

Die Zumischung dieser Mittel zu den erfindungsgemäßen Fungiziden kann im Gewichtsverhältnis 1 :10 bis 10 :1 erfolgen. Sie können gegebenenfalls auch erst unmittelbar vor der Anwendung (Tankmischung) zugesetzt werden.

Die folgenden Beispiele A-C zeigen die biologische Wirkung der neuen Substanzen. Als Vergleichssubstanzen dienten dabei cis-N-[(Trichlormethyl)-thio]-4-cyclohexen-1,2-dicarboximid (Y) (Chem. Werk, June 21, 1972, S. 46) und Thiolphosphorsäure-O,O-diethyl-S-benzylester (Z) (US-PS 3 274 051).

A. 100-g-Proben Erbsensaatgut der Sorte « Senator » werden in Glasflaschen etwa 5 Minuten lang mit 300 mg (= 0,3 Gew.-%) Beizmittelaufbereitungen, die 40 % Wirkstoff in der Trockensubstanz enthalten, sorgfältig gebeizt. Danach werden jeweils 100 Samen in Saatkisten 3 cm tief und mit einem Abstand von 3-5 cm in eine Komposterde eingesät, die eine starke natürliche Verseuchung mit den Pilzen Pythium spec., Aphanomyces spec. und Fusarium oxysporum aufweist. Die Kästen werden im Gewächshaus bei Temperaturen von 17 bis 20 °C aufgestellt. Nach einer Versuchsdauer von 21 Tagen wird die Anzahl gesunder Erbsenpflanzen ermittelt.

| Verbindung des Beispiels Nr. | ..% gesunde Pflanzen nach 21 Tagen in Komposterde |
|---|---|
| 2 | 96 |
| 8 | 92 |
| 9 | 85 |
| Y | 70 |
| Kontrolle (unbehandelt) | 18 |
| Kontrolle (unbehandelt) sterilisierte Komposterde | 94 |

B. Blätter von in Töpfen gewachsenen Reiskeimlingen werden mit einer wäßrigen Konidienaufschwemmung des Pilzes Pyricularis oryzae künstlich infiziert. Nach der Infektion werden die Pflanzen 24 Stunden lang in einer Kammer bei Temperaturen von 22 bis 25 °C und hoher Luftfeuchtigkeit (Wasserdampfsättigung) aufgestellt und nach Ablauf dieser Zeit mit 0,1 %iger (Gew.-%) wäßrigen Emulsion, die 80 % Wirkstoff und 20 % Dispergiermittel in der Trockensubstanz enthält, tropfnaß gespritzt. Die Töpfe mit den Pflanzen werden dann in die feuchte Kammer zurückgestellt. Nach 5 Tagen haben sich auf den unbehandelten Kontrollpflanzen die Krankheitssymptome so stark ausgebildet, daß die entstandenen Blattflecken den überwiegenden Teil der Gesamtfläche bedecken. Die Bewertung des Pilzbefalls erfolgt nach dem Schema : 0 = Blätter befallsfrei, abgestuft bis 5 = Blätter stark befallen.

| Verbindung des Beispiels Nr. | Befall der Blätter nach Spritzung mit 0,1 % iger Wirksubstanz |
|---|---|
| 4 | 1 |
| 7 | 1 |
| 9 | 0 |
| Z | 2 |
| Kontrolle (unbehandelt) | 5 |

C. Zur Ermittlung der fungiziden Wirksamkeit gegenüber den holzzerstörenden Pilzen Coniophora puteana und Trametes versicolor wurden in Anlehnung an die DIN-Vorschrift 52 176, Blatt 1, « Prüfung von Holzschutzmitteln, Mykologische Kurzprüfung (Klötzchenverfahren) » Kiefernsplintholzklötzchen mit den Abmessungen 50 × 15 mm mit jeweils 200 g/m² Holzoberfläche öligen Holzschutzmittelzubereitungen, die 1 und 2 % Wirkstoff enthielten, bestrichen. Nach vierwöchiger Lagerung wurden die behandelten Klötzchen zusammen mit den unbehandelten in Glasschalen gelegt, die als Prüfpilz Coniophora puteana bzw. Trametes versicolor auf einem Nähragar enthielten. Die Schalen wurden anschließend in einem Klimaraum bei einer Temperatur von 22 °C und einer relativen Luftfeuchte von 70 % bebrütet. Nach dreimonatiger Versuchsdauer wurden die Klötzchen von anhaftendem Pilzmycel befreit und getrocknet. Anschließend wurde das Ausmaß der Holzzerstörung festgestellt.

| | | Ausmaß des Pilzangriffs nach dreimonatiger Versuchsdauer | |
|---|---|---|---|
| Verbindung des Beispiels Nr. | ..% Verbindung in der Zubereitung | Coniophora puteana | Trametes versicolor |
| 1 | 1 | 1 | 1 |
| 2 | 2 | 1 | 1 |
| 3 | 1 | 1 | 1 |
| | 2 | 1 | 1 |
| 5 | 1 | 1 | 1 |
| | 2 | 1 | 1 |
| Kontrolle (nur Lösungsmittel ohne Wirkstoff) | — | 3a/4b | 3b |

Bewertungsschema :

1 unversehrt, 2a stellenweise wenig angegriffen, 2b im ganzen wenig angegriffen, 3a stellenweise stark angegriffen, 3b im ganzen stark angegriffen, 4a stellenweise völlig verstört, 4b im ganzen völlig zerstört.

**Ansprüche**

1. Thiolphosphorsäure-S-4-nitro-2-trichlormethylphenylester der Formel I

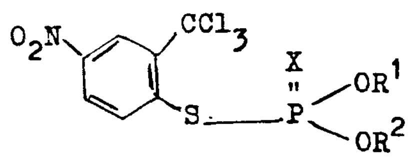

I,

in der

X Sauerstoff oder Schwefel und

$R^1$ und $R^2$ gleich oder verschieden sind und gegebenenfalls substituierte aliphatische Reste mit 1-18 Kohlenstoffatomen oden gegebenenfalls substituierte alicyclische Reste mit 5-18 Kohlenstoffatomen bedeuten.

2. Verfahren zur Herstellung der Thiolphosphorsäure S-4-nitro-2-trichlormethylphenyl-ester der Formel I gemäß Anspruch 1, *dadurch gekennzeichnet,* daß man

a) 4-Nitro-2-trichlormethyl-benzolsulfensäurechlorid in einem inerten Lösungsmittel mit einem Phosporigsäurediester der Formel II

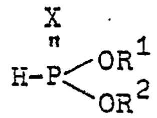

(II),

worin $R^1$, $R^2$ und X die oben angegebene Bedeutung besitzen, bei Temperaturen von −40 bis 120 °C umgesetzt oder

b) — falls X Sauerstoff bedeutet und $R^1$ und $R^2$ gleich sind — 4-Nitro-2-trichlormethylbenzolsulfensäurechlorid mit einem Phosphit der Formel III

$$P(OR^1)_3 \qquad (III),$$

worin $R^1$ dasselbe wie oben bedeutet, in einem inerten Lösungsmittel bei Temperaturen von −20 bis 120 °C reagieren läßt.

3. Fungizid enthaltend mindestens eine Verbindung gemäß Anspruch 1.

4. Fungizid enthaltend mindestens eine Verbindung gemäß Anspruch 1, und einen festen oder flüssigen Trägerstoff.

5. Thiolphosphorsäure-O,O-dimethyl-S-4-nitro-2-trichlormethyl-phenyl-ester,
Dithiophosphorsäure-O,O-dimethyl-S-4-nitro-2-trichlormethylphenyl-ester,
Thiolphosphorsäure-O,O-diethyl-S-4-nitro-2-trichlormethylphenyl-ester,
Dithiophosphorsäure-O,O-diethyl-S-4-nitro-2-trichlormethylphenyl-ester,
Thiolphosphorsäure-O,O-di-n-propyl-S-4-nitro-2-trichlormethylphenyl-ester,
Thiolphosphorsäure-O-methyl-O-cyclohexyl-S-4-nitro-2-trichlormethyl-phenyl-ester,
Thiolphosphorsäure-O,O-di-n-butyl-S-4-nitro-2-chlormethylphenyl-ester und
Thiolphosphorsäure-O,O-di-n-dodecyl-S-4-nitro-2-trichlormethylphenyl-ester.

6. Fungizid, enthaltend eine Verbindung, ausgewählt aus der Gruppe gemäß Anspruch 5.

7. Verwendung von Verbindungen der Formel I gemäß Anspruch 1 bei der Bekämpfung von Fungi.

**Claims**

1. Thiolphosphoric acid-S-4-nitro-2-trichloromethylphenyl esters of the formula I

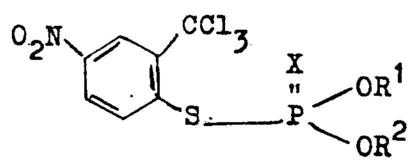

I,

where X denotes oxygen or sulfur, and $R^1$ and $R^2$ are identical or different and each denotes a substituted or unsubstituted aliphatic radical of 1 to 18 carbon atoms, or a substituted or unsubstituted alicylic radical of 5 to 18 carbon atoms.

2. A process for the manufacture of the thiolphosphoric acid-S-4-nitro-2-trichloromethylphenyl esters of the formula I as claimed in claim 1, *characterized in that*

a) 4-nitro-2-trichloromethylbenzenesulfenic acid chloride is reacted in an inert solvent with a phosphorous acid diester of the formula II

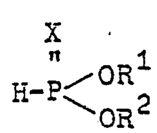

(II),

where $R^1$, $R^2$ and X have the above meanings, at from −40° to + 120 °C, or

b) — when X is oxygen and $R^1$ and $R^2$ are identical — 4-nitro-2-trichloromethylbenzenesulfenic acid chloride is allowed to react with a phosphite of the formula III

$$P(OR^1)_3 \qquad III,$$

where $R^1$ has the above meanings, in an inert solvent and at from −20° to + 120 °C.

3. A fungicide containing at least one compound as claimed in claim 1.

4. A fungicide containing at least one compound as claimed in claim 1 and a solid or liquid carrier.

5. Thiolphosphoric acid-O,O-dimethyl-S-4-nitro-2-trichloromethylphenyl ester, dithiophosphoric acid-O,O-dimethyl-S-4-nitro-2-trichloromethylphenyl ester, thiolphosphoric acid-O,O-diethyl-S-4-nitro-2-trichloromethylphenyl ester, dithiophosphoric acid-O,O-diethyl-S-4-nitro-2-trichloromethylphenyl ester, thiolphosphoric acid-O,O-di-n-propyl-S-4-nitro-2-trichloromethylphenyl ester, thiolphosphoric acid-O-methyl-O-cyclohexyl-S-4-nitro-2-trichloromethylphenyl ester, thiolphosphoric acid-O,O-di-n-butyl-S-4-nitro-2-chloromethylphenyl ester, and thiolphosphoric acid-O,O-di-n-dodecyl-S-4-nitro-2-trichloromethylphenyl ester.

6. A fungicide containing a compound selected from the group as claimed in claim 5.

7. Use of compounds of the formula I as claimed in claim 1 for combating fungi.

**Revendications**

1. Esters S-4-nitro-2-trichlorométhylphényliques d'acide thiolphosphorique, de formule I

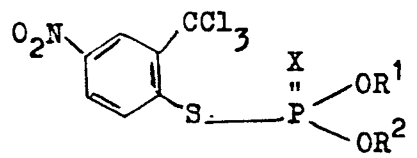

I

dans laquelle

X représente de l'oxygène ou du soufre et

$R^1$ et $R^2$ sont identiques ou différents et représentent des restes aliphatiques en $C_1$ à $C_{18}$ éventuellement substitués ou des restes alicycliques en $C_5$ à $C_{18}$ éventuellement substitués.

2. Procédé de préparation des esters S-4-nitro-2-trichlorométhylphényliques d'acide thiolphosphorique de formule I, selon la revendication 1, caractérisé par le fait que

a) l'on fait réagir, à des températures comprises entre −40 et 120 °C, dans un solvant inerte, du chlorure d'acide 4-nitro-2-trichlorométhyl-benzènesulfénique avec un diester d'acide phosphoreux de formule II

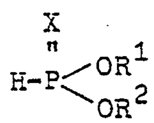

(II)

dans laquelle $R^1$, $R^2$ et X ont la signification indiquée plus haut, ou

b) dans le cas où X représente de l'oxygène et $R^1$ et $R^2$ sont identiques, on fait réagir, à des températures comprises entre −20 et 120 °C, dans un solvant inerte, du chlorure d'acide 4-nitro-2-trichlorométhylbenzènesulfénique avec un phosphite de formule III

$P(OR^1)_3$ III

dans laquelle $R^1$ a la signification indiquée plus haut.

3. Fongicide contenant au moins un composé selon la revendication 1.

4. Fongicide contenant au moins un composé selon la revendication 1 et un support solide ou liquide.

5. Le groupe des composés suivants :

ester O,O-diméthyl-S-4-nitro-2-trichlorométhylphénylique d'acide thiolphosphorique,
ester O,O-diméthyl-S-4-nitro-2-trichlorométhylphénylique d'acide dithiophosphorique,
ester O,O-diéthyl-S-4-nitro-2-trichlorométhylphénylique d'acide thiolphosphorique,
ester O,O-diéthyl-S-4-nitro-2-trichlorométhylphénylique d'acide dithiophosphorique,
ester O,O-di-n-propyl-S-4-nitro-2-trichlorométhylphénylique d'acide thiolphosphorique,
ester O-méthyl-O-cyclohexyl-S-4-nitro-2-trichlorométhylphénylique d'acide thiolphosphorique,
ester O,O-di-n-butyl-S-4-nitro-2-chlorométhylphénylique d'acide thiolphosphorique, et
ester O,O-di-n-dodécyl-S-4-nitro-2-trichlorométhylphénylique d'acide thiolphosphorique.

6. Fongicide contenant un composé choisi dans le groupe selon la revendication 5.

7. Emploi de composés répondant à la formule I selon la revendication 1 pour la lutte contre les champignons parasites.